# EUROPEAN PATENT APPLICATION

(11) **EP 2 112 414 A1**
(43) Date of publication of application: **28.10.2009**
(21) Application number: 06781783.3
(22) Date of filing: 27.07.2006
(51) Int. Cl.: F16L 23/04

(54) **HOUSING-SHAPED PIPE JOINT**

(71) Applicant: Hagiya, Hiroshi, Hitachiota-shi, Ibaraki 3130048 (JP)
(72) Inventor: Hagiya, Hiroshi, Hitachiota-shi, Ibaraki 3130048 (JP)
(74) Representative: Fleuchaus, Michael A.
(86) International application number: PCT/JP2006/314872
(87) International publication number: WO 2008/012893

(57) **Abstract**

The present invention provides an improved housing-shaped pipe joint improved and able to augment the quality by avoiding the chattering between the housing and the annular groove and increasing the rigidity of the connection between the pipes irrespective of the groove-forming way being rolling or cutting. For this purpose, the inner peripheral surfaces (9a, 10a) of the flange claws (9, 10) are formed as slant surfaces inclined with respect to the reference line (Z) over the entire length in a peripheral direction of the inner peripheral end portions (9t, 10t). A pair of housings (1, 1) have its respective ends each of which is dividedly formed with a concave portion (16) and a convex portion (17) which can make the relative positioning of the paired housings (1, 1) with respect to each other by being fitted into one another. And there is provided a relative-position adjusting means (B) sets a dimension of the concave portion (16) longer than that of the convex portion (17) in the housing-widthwise direction, can staggeringly move the relative positions of the paired housings (1,1) with respect to each other in a fitting state where the concave portion (16) and the convex portion (17) are fitted into each other to be staggeringly moved in a direction where they are mutually twisted and enables a retaining means (I) to function as they are staggeringly moved.

## Description

### [Technical Field]

The present invention relates to a housing-shaped pipe joint which is applicable to various sorts of pipings for the water-supply, the fire-extinguishing, cooling water, warm water, discharged-water and the like and comprises two pipes, which are to be connected, each having opposite ends onto which a gasket is fitted and a housing covering the gasket from above, the thus produced assembly being fastened by a bolt and a nut of a fastening means to hermetically seal the fluid therein, and besides a release-preventing mechanism, and more specifically a housing-shaped pipe joint that has an end portion an outer periphery of which is formed with a annular groove continuous in a peripheral direction and with a groove-shaped joint structure provided for release-prevention.

### [Background Art]

As for examples of the housing-shaped pipe joint of this type, conventionally known are those disclosed in Patent Literature 1 and Patent Literature 2. The housing-shaped pipe joint disclosed in the Patent Literature 1 comprises seat surfaces, which mutually oppose on attaching the pipes to a pair of housings, formed with a substantially semi-circular convex engaging portion and a concave engaging portion to be fitted into one another which are dividedly formed as they are offset with respect to a center line of the housing (a line perpendicular to a longitudinal direction of the pipe). Owing to this arrangement, when fastening the paired housings to each other toward the end portions of the pipes by using bolts and nuts, the housings are mutually fixed while they are positioning offset with respect to one another in a horizontal direction (a direction longitudinal of the pipe) through a positioning function exerted upon fitting the convex engaging portion into the concave engaging portion or vice versa.

The housing-shaped pipe-joint disclosed in the Patent Literature 2 adopts a construction that includes a housing in which a pair of semi-arcuate fastening portions each has opposite end portions on the inside and the outside of which projections are provided in a horizontal direction (a direction longitudinal of the pipe) within a peripheral range of a predetermined angle that are formed integrally so that they project oppositely to each other at the respective peripheral end portions. According to this construction, while the paired housings are attached to the end portions of the pipe by fastening the bolts and nuts, the portions projecting inward and outward come to move frictionally on the side wall of the annular groove.

More specifically, each of the housing-shaped pipe joints disclosed in the Patent Literature 1 and the Patent Literature 2 functions so as not to chatter in a direction of a groove-width between an annular groove and a fastening portion (a direction longitudinal of the pipe) along with the fastening attachment performed by the bolts and nuts of the housing. This function has an advantage of being able to attenuate the defect that the pipe and the pipe joint relatively move in the longitudinal direction of the pipe when the inner pressure has caused the thrust of the piping as well as the thermal expansion and contraction of the piping, i.e., the defect that a connection portion between the pipes made by using the housing-shaped pipe joint lacks the rigidity.

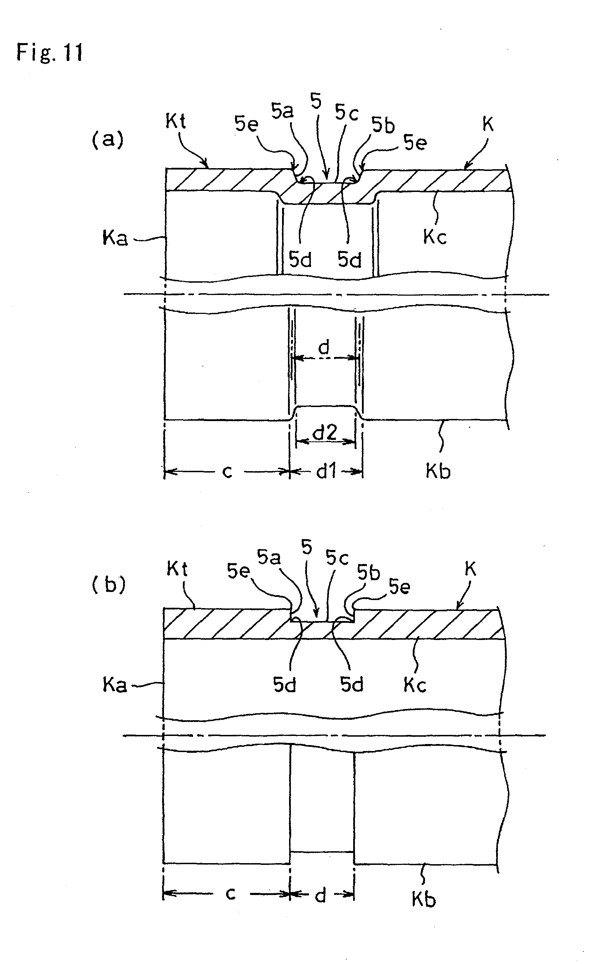

The above-mentioned two types of the techniques (Patent Literatures 1 and 2) should improve the connection rigidity of the connection portion between the pipes through utilizing the housing-shaped pipe joint. However, in fact, such an effect was not effectively obtained some times for the following reasons.
The means for forming the annular groove to be formed at the end portion of the pipe is roughly divided into two kinds one of which relies on rolling and the other of which resorts to cutting. Fig. 11(a) shows an annular groove 5 formed by rolling. The rolling way for making the annular groove 5 is to deform forcedly the pipe wall toward its inner-diameter side by using a roll-working machine (not shown). The groove-opening width d1 is larger than the groove-bottom width d2 (d1>d2). The left and right side peripheral walls 5a and 5b become inclined tapered walls and at the same time the corner portion 5d between the groove bottom 5c and the left and right side peripheral walls 5a, 5b comes to be round as well as the angled portion 5e between the left and right side peripheral walls 5a, 5b and the outer peripheral surface Kb of the pipe (the corner R and the angled corner R).

Fig. 11(b) shows an annular groove 5 formed by cutting. The annular groove 5 is formed by cutting a pipe wall Kc from an outer peripheral surface Kb of the pipe. Therefore, the groove bottom 5c and the left and right side peripheral walls 5a and 5b come to be substantially complete flat surfaces. And at the same time the corner portion 5d and the angled portion 5e are formed so that they are no more provided with rounding but make right angles (so-called, a pin corner and a pin angle). The annular groove formed by cutting costs high. But it is excellent in working accuracy and can be finished to have a size just as it is designed with little accidental error. On the other hand, the annular groove 5 formed by rolling as mentioned above is apt to be relatively large in dimension error owing to fraction or the like and the product error but is worked at a low cost and is excellent in productivity.

Each of the pipe joints disclosed in the above-mentioned Patent Literatures 1 and 2 is a technique based on the presumption that the annular groove is formed with the dimension accuracy as initially expected. But since there actually exist the annular grooves formed by either rolling or cutting, even the technique disclosed in each of the Patent Literature 1 and 2 cannot solve the chattering between the annular groove and the pipe joint and some times there was found several ones that are inferior in connection rigidity. As such, in order to increase the connection rigidity between the pipe connections in the housing-shaped pipe joint, there remains actually still something more to be improved.
Patent Literature 1: Patent No. 2538261
Patent Literature 2: Patent Application Laid-Open 11-241793

### [Disclosure of the Invention]

### [Problem the Invention Attempts to Solve]

The present invention has an object to realize and provide an improved housing-shaped pipe joint which can avoid the chattering between the housing and the annular groove by the devise of structure mainly for the housing irrespective of whatever way is used for forming grooves, rolling or cutting, and which increases the connection rigidity between the pipe connections.

### [Means for Solving the Problem]

The invention defined in claim 1 is a housing-shaped pipe joint which comprises a pair of housings 1 each substantially semi-circular in its entire shape and substantially horizontally-oriented C-shaped and formed with flange claws 9, 10 having inner peripheral end portions 9t, 10t which can be slidably fitted into the annular grooves 5, 5 on the opposite sides of a space 6 in which a ring-like gasket 2 is arranged, so as to connect end portions Kt in a pair of tubes K each provided with an annular groove 5 on its outer periphery thereof, by bringing them into mutual butting contact in a sealed manner, and a retaining means I for freely retaining a state in which the housings 1, 1 are forcedly pressed in a direction where the housings mutually approach, wherein
the flange claws 9, 10 have inner peripheral surfaces 9a, 10a formed as slant surfaces so that they are inclined with respect to a reference line (Z) which comes to be a center in a widthwise direction of the housing 1 over an entire or a substantially entire length in a peripheral direction of the inner peripheral end portions 9t, 10t,
the paired housings 1, 1 have end portions in the peripheral direction, so that each of the end portions is formed with a concave portion 16 and a convex portion 17 dividedly so that they are fitted into each other, thereby allowing the paired housings 1, 1 to relatively position with respect to one another, and
there is provided a relative-position adjusting means for setting a dimension of the concave portion 16 in the housing-widthwise direction longer than that of the convex portion 17 in the housing-widthwise direction, enabling the relative positions of the paired housings 1, 1 with respect to each other in a fitting state where the concave portion 16 and the convex portion 17 are fitted into each other to be staggeringly moved in a mutually twisting direction, and allowing the above-mentioned retaining means (I) to function as they are staggeringly moved.

The invention as defined in claim 2 is the housing-shaped pipe joint as defined in claim 1, wherein the width h of each of the inner peripheral surfaces 9a and 10a is set to become smaller than the smallest one of the annular groove 5 and constant in a peripheral direction.

The invention as defined in claim 3 is the housing-shaped pipe-joint as defined in claim 1 or 2, wherein the above-mentioned retaining means (I) comprises through holes 11, 11 for inserting bolts of the respective attaching pieces 7,7, to be formed on the opposite end portions in a peripheral direction of the housing 1 and bolt 3 and a nut 4 which can be freely thread-attached through the holes for inserting bolts 11, 11 of attaching pieces 7, 7 in a state where they are fitted into one another, and
the relative-position adjusting means B includes a construction such that the bolt-insertion hole 11 is set to a size applicable with somewhat allowance error to the bolt-insertion position in the housing-widthwise direction.

The invention as defined in claim 4 is the housing-shaped pipe joint as defined in claim 3 wherein the attaching piece 7 has a surface 7a facing the opposite housing side, the surface 7a being set to a position retracted from a peripheral end surface 8a of the housing 1.

The invention as defined in claim 5 is the housing-shaped pipe joint as defined in any one of claims 1 to 4 wherein, in the abovementioned fitting state, the paired housings 1, 1 have their inner peripheral surfaces 9a, 10a continuously provided to form a loop-shape of an ellipse, when seen in the housing-widthwise direction, which has a diameter (Ra) in a housing-opening direction, slightly larger than the largest diameter (Dmax) within a range of allowable dimension error of the annular groove 5 and a diameter inwards (Rb) of the housing is within the allowable dimension error of the annular groove 5 and slightly smaller than the smallest diameter of (Dmin).

The invention as defined in claim 6 is the housing-shaped pipe joint as defined in any one of claims 1 to 5, wherein the outside end edge (f) in the housing-widthwise direction of each of the inner peripheral surfaces 9a and 10a is formed by inclining a side peripheral surface portion 12b of a constant or a substantially constant width, inwards from the inner-diameter side end on an outside surface 12 of the housing 1 in a direction where the inner diameter side end approaches closely to the inner side in the housing-widthwise direction and by gradually changing an inclination angle (β) in a peripheral direction.

The invention as defined in claim 7 is the housing-shaped pipe joint as defined in claim 6 wherein an edge (e) of the outer diameter side end of the side peripheral portion 12b is formed to become parallel with the above-mentioned reference line (Z) when seen in a direction perpendicular to the housing-widthwise direction.

### Effect of the Invention

According to claim 1, although explained in details in the section of the Embodiment, it is possible to easily and assuredly perform the positioning when conducting the assembling by externally fitting a pair of housings onto the pipes by adopting a structure where a pair of a concave portion and a convex portion are fitted into each other. Further, in spite of the fact that a relatively large dimension error of the annular groove is caused due to the rolling by a twisting movement of the housings, with the inner peripheral surfaces of the paired flange claws taken as inclined surfaces with respect to a reference line, which is a center line of the housing, the flange claws have the inner peripheral end portions the opposite peripheral rear end portions of which are brought into butting contact with the side peripheral wall of the annular groove by a moderate angle. This can realize the housing-shaped pipe joint which can connect the pipes in a tightly sealed manner and more rigidly than conventional ones. More specifically, no matter whatever the groove-formation way such as the rolling and the cutting is, it is possible to provide an improved housing-shaped pipe joint which can avoid the chattering between the housings and the annular groove, and increase the connection rigidity in the connection portion between the pipes and as a result increase the quality.

According to the invention as defined in claim 2, even with a large dimension error occurring in the annular groove width, it offers the advantage of being able to obtain the function and effect produced by the invention as defined in claim 1 under the same condition of butting angle between the side peripheral walls on the opposite sides of the annular groove and the flange claws.

According to the invention as defined in claim 3, it is possible to realize a reasonable retaining means which is inexpensive and functions assuredly, with a function of drawing the housings toward each other by a bolt and a nut and provide a housing-shaped pipe joint which has an advantage of being able to exert the effect (a reasonable retaining means) by resorting to the simple structure devise of setting each of the bolt-insertion holes to be formed in the attaching pieces formed on the opposite ends of the housing, applicable with somewhat allowance error to a size, such as an unloaded hole and a slot, to the bolt-insertion position in the housing-widthwise direction irrespective of the housings being twistingly moved or not.

According to the invention as defined in claim 4, it does not cause such a disadvantage of bringing the attaching pieces into mutual butting contact, which make a flexible deformation to oppose each other, due to the increase of the fastening torque produced by the bolt and nut. Therefore, the fastening force produced by the bolt and nut is effectively used as the force for pressing a pair of housings to each other with the result of being able to provide a housing-shaped pipe joint which well realizes the rigid connection state between the paired pipes in a sealed manner.

According to the invention as defined in claim 5, although explained in the section of the Embodiment in details, it is possible to avoid the fact that the force produced by the retaining means when the housing end surfaces are brought into butting contact with each other, for example, the fasting torque reaches the top and therefore make full use of the force for maintaining the housings under pressure by the retaining means such as the bolt and nut and the like as the compression force for the gasket without failure irrespective of being strong or weak. As a result, in addition to the function and effect offered by the construction as defined in any one of claims 1 to 4, there is obtained an advantage that a good sealing property is acquired owing to the compression of the gasket.

According to the invention as defined in claim 6, although explained in details in the section of the Embodiment, it offers the convenience that it is possible to confirm such a standard (reference) state that the reference lines, which are center lines of the respective housing, are coincident with each other by conducting from the external side, a visual observation that the edges of the housing-widthwise outer diameter side ends are overlapped with each other when seen in a direction perpendicular to the housing-widthwise direction. Further, since the inner peripheral end portion comes to be an inclined surface, it also offers another advantage that it is suitable to the annular groove which comes to have its side peripheral surface inclined when that annular groove is formed by rolling. In this case, as defined in claim 7, if the housing side peripheral surface portion has an outer-diameter side end edge constructed so as to render it parallel to the reference line when seen in the direction perpendicular to the housing-widthwise direction, it presents still another advantage that it is easy to confirm whether or not the present state is the standard (reference) one by a means for judging whether or not those edges reside in the direction perpendicular to the housing-width direction (the direction longitudinal of the pipe).

### [Brief Description of the Drawings]

[Fig. 1] is a decomposed perspective view showing a structure of a housing-shaped pipe joint (Embodiment 1) ;
[Fig. 2] Fig. 2(a) is a sectional view showing an engaging structure where a housing is engaged with an annular groove and Fig. 2(b) is a schematic view showing an actual engaging state where an inner peripheral surface of a housing is engaged with the annular groove;
[Fig.3] Fig. 3(a) is a side view showing the state where the housings are fitted into each other and Fig. 3(b) is a schematic view comparing an elliptical shape of an inner peripheral surface of each of the paired housings with a circular shape of the annular groove;
[Fig. 4] is a perspective view of parts of the housing;
[Fig. 5] is a developed view of an inner surface side of the housing;
[Fig. 6] is a side view showing an engaging structure such that the housing is engaged with a pipe when the annular groove is the reference value;
[Fig. 7] is a side surface view showing a state where the pipe joint is attached when the annular groove is narrower than the reference value;
[Fig. 8] is a side view showing a state where the pipe joint is attached when the annular groove is wider than the reference value;
[Fig. 9] is side view showing a special example of a state where the pipe joint is attached when the annular groove is wider than the reference value;
[Fig. 10] is a schematic view showing a state, with an angle exaggerated, where the inner peripheral surface is engaged with the annular groove;
Fig. 10(a) is a case where the annular groove has a narrow width;
Fig. 10 (b) is a case where the annular groove has a standard width;
Fig. 10(c)is a case where the annular groove has a wide width; and
[Fig 11] shows an annular groove of a pipe end portion; and
Fig.. 11(a) is a groove formed by rolling and Fig. 11(b) is a groove formed by cutting.

### [Explanation of Numerals]

1......... housing
2......... gasket
3......... bolt
4......... nut
5......... annular groove
6......... space
7......... attaching piece
7a...... surface on the opposite housing side (opposing surface)
9, 10... flange claw
9a, 10a... inner peripheral surface
9t, 10t... inner peripheral end portion
8a......... end surface in a peripheral direction of the housing
11......... bolt-insertion hole
12......... outer side surface of the housing
12b...... side peripheral surface portion
16...... concave portion
17...... convex portion
e..... an outer diameter side end edge of a side peripheral portion
f............ outside end edge which comes to an outer side in a housing-widthwise direction of the inner peripheral surface
h............ width of the inner peripheral surface
A.... housing-shaped pipe joint
B............ relative-position adjusting means
Dmax..... largest diameter within an allowable dimension error of the annular groove
Dmin..... smallest diameter within an allowable dimension error of the annular groove
I..... retaining means
K.... pipe
Kt......... end portion
Ra......... diameter in a direction of a housing opening
Rb......... diameter in a direction inward of the housing
Z..... reference line
β ......... inclination angle of the side peripheral portion

### [Most Preferred Embodiment of the Invention]

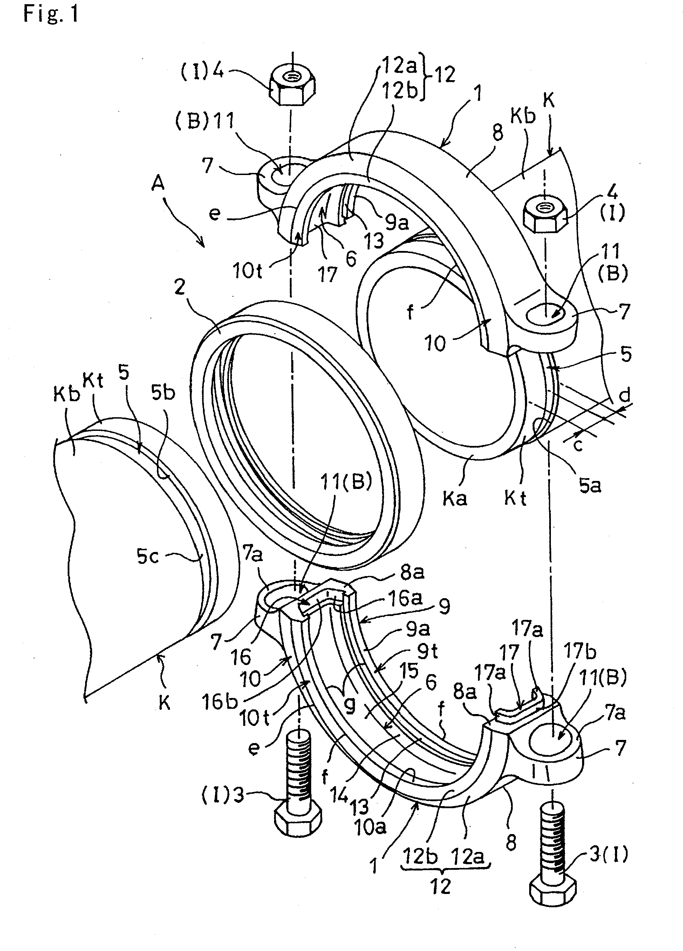

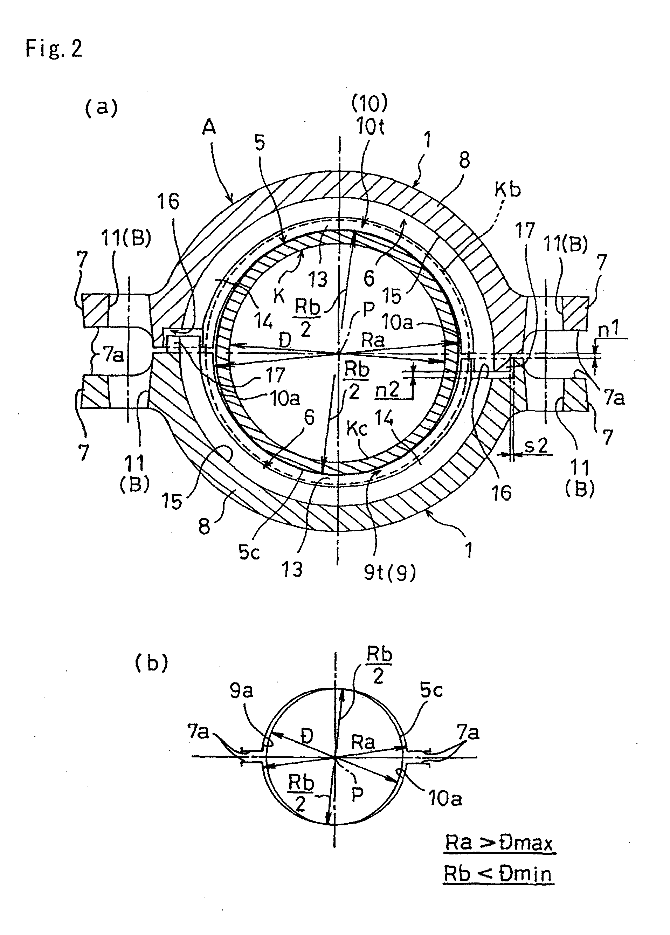

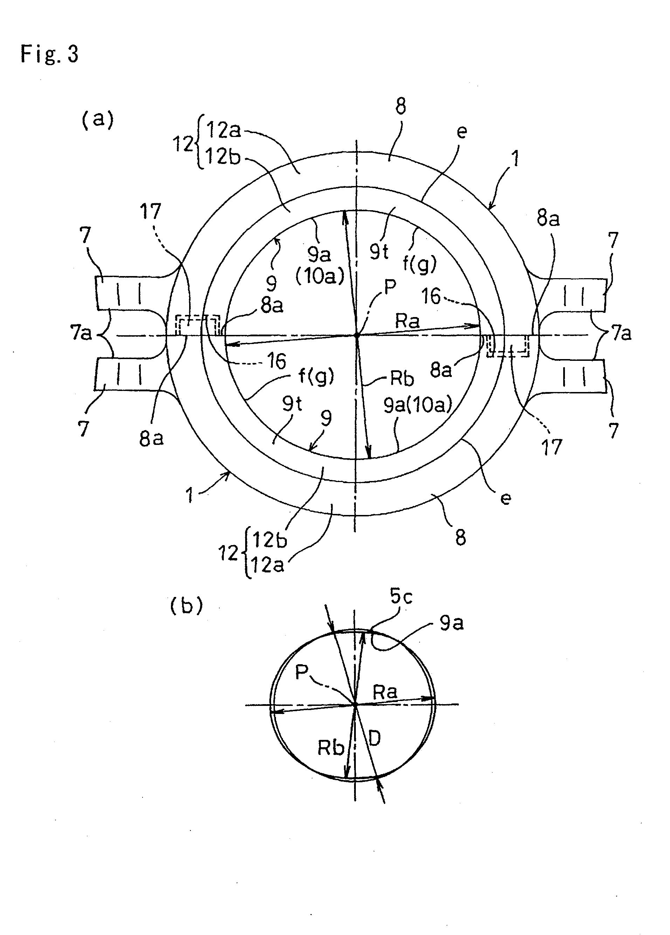

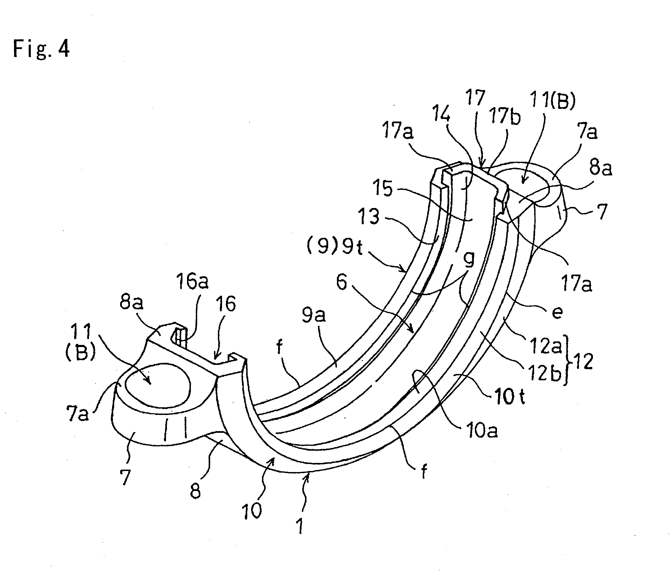

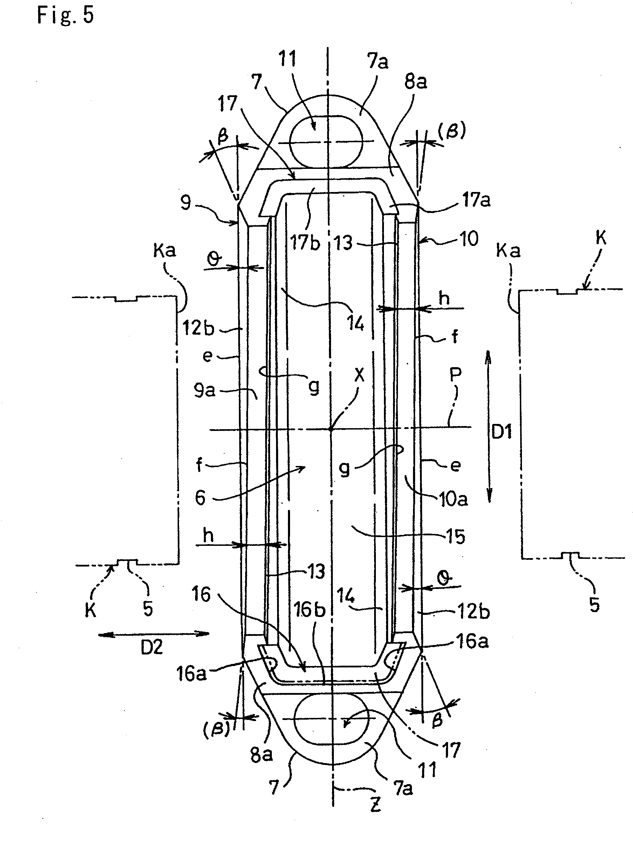

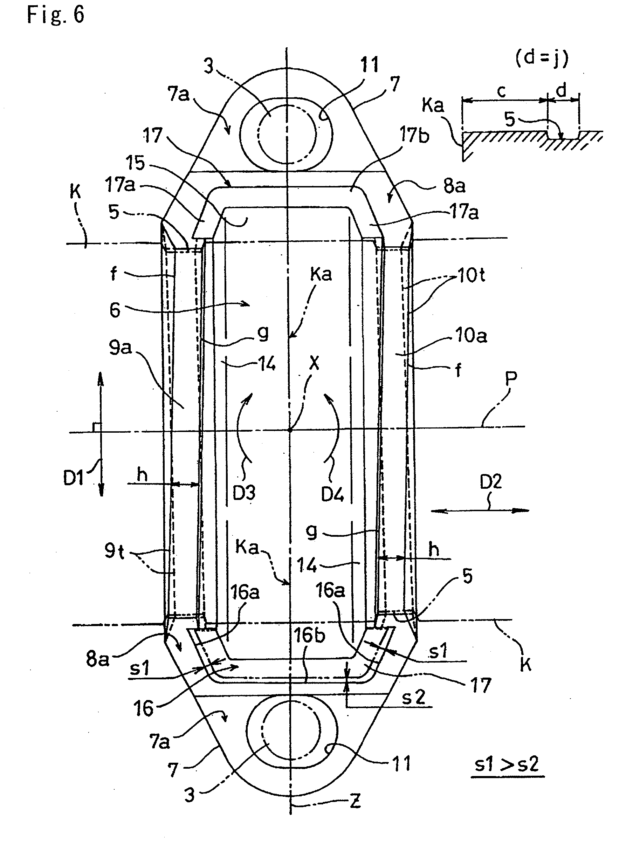

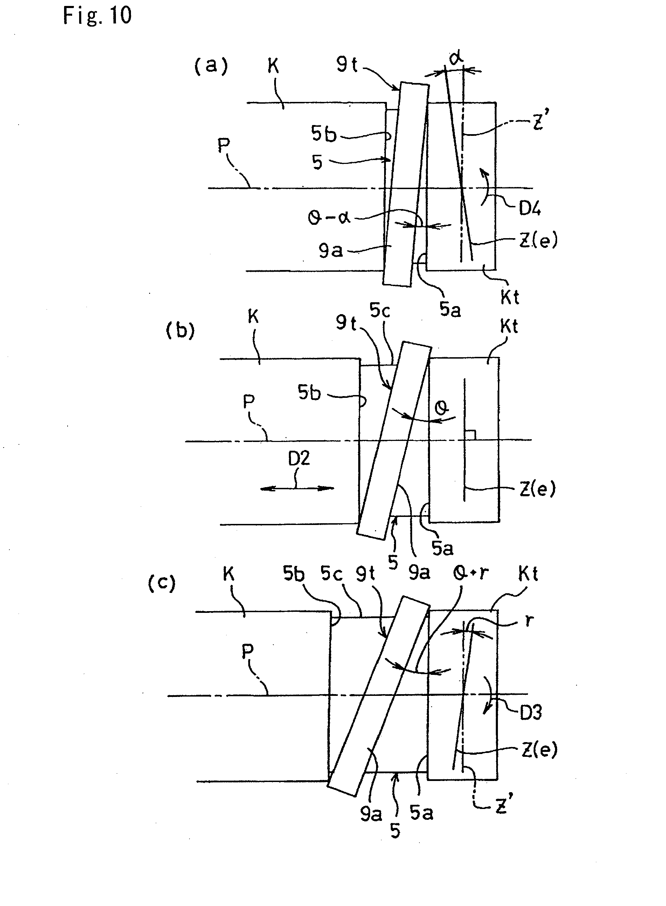

Hereafter, an embodiment of a housing-shaped pipe joint is explained with reference to the attached drawings. Fig. 1 is a decomposed perspective view of the housing-shaped pipe. Fig. 2 is a sectional view at the annular groove portion. Fig. 3 is a side view showing the state where a pair of housings are overlapped with each other. Fig. 4 is a perspective view showing parts of the housing. Fig. 5 is a developed view of an inner peripheral side of the housing. Fig. 6 to Fig. 9 are side views showing an engaging state of the housing with the annular groove, in a standard state, a reduced-width state, an increased-width state and a special increased-width state, respectively. Fig. 10 is enlarged schematic views showing a standard state, a reduced-width state, and an increased-width state, respectively. Fig. 11 shows annular grooves formed by different producing means, respectively.

### [Embodiment 1]

A housing-shaped pipe joint (A) according to an Embodiment 1, as shown in Figs. 1 to 3, includes a means for connecting a pair of pipes (K, K) arranged oppositely to each other in a sealed manner, which comprises a pair of housings 1, 1 identical to each other, a ring-like gasket 2 and two sets of a bolt 3 and a nut 4. The housing-shaped pipe joint A comprises a pair of housings, substantially horizontally-oriented C-shaped in section and semi-circular in its entire shape, formed with flange claws 9, 10 having inner peripheral end portions 9t, 10t able to be fitted into the annular groove 5 on the opposite sides of a space 6 in which a gasket 2 is positioned (housed) so as to connect end portions in a pair of pipes (K) each having an annular groove 5 on an outer periphery of an end portion Kt by bringing them into butting contact with each other in a sealed manner in a state where the gasket 2 is externally fitted onto them as it is bridged over the both end portions (Kt, Kt), and a retaining means (I) which comprises a bolt 3 and a nut 4 able to retain a state where these housing 1, 1 are forcedly pressed in a direction in which they approach to one another.

As for one example of the ways for processing an end of the pipe (K), an annular groove 5 is formed on the end portion (Kt) by rolling (or cutting) so that its width (d) is set to be 8.1 mm (precisely, a groove-opening width is 8.7 mm and a groove-bottom width d2 is 7.5 mm) and to be at a distance (c) of 15.9 mm from a pipe end Ka on an outer side end on a pipe end (Ka) side of the annular groove 5 (see also Fig. 11(a)). Available for the outer diameter size of the pipe (K) is generally 2 inch to 6 inch. The gasket 2 is generally self-sealed type one having a lip-groove shape in section and formed in a ring-like shape in its entire and is formed from synthetic resin or the like.

As shown in Figs. 1 to 6, the housing 1 comprises a substantially semi-peripheral web 8, a pair of flange claws 9 and 10 integrally formed with the semi-peripheral web 8 while extending from opposite sides of a width direction of the web 8 to an inner-diameter side, and attaching pieces 7, 7 integrally formed with the peripheral opposite end portions of the web 8. The left and right flange claws 9, 10 and the web 8 surrounds a portion to be formed into the space 6. Peripheral opposite end surfaces 8a, 8a of the both webs 8 are surfaces each defined as a part of an imaginary horizontal plane parallel to an axis (P) of the housing (same as an axis of the pipe (K)). In an assembled state shown in Fig. 2, the respective attaching pieces 7, 7 project in a direction of an outer diameter of a housing axis (P) so as to form a space (spaced them from each other) between the opposing and attaching pieces 7, 7. The opposing surfaces 7a are formed at a position clearly retracted from corresponding end surfaces 8a (the imaginary horizontal surface). Further, the respective attaching pieces 7, 7 are formed with bolt-insertion holes 11 in the shape of slots long in the direction longitudinal of the pipe.

The respective flanges 9, 10 have inner peripheral surfaces 9a, 10a inclined by an angle (□) with respect to a reference line (Z) which comes to be a center in a widthwise direction (a direction indicated by an arrow (D2) in Figs. 5 and 6) of the housing 1 over an entire length (or a substantially entire length) in a peripheral direction of the inner peripheral end portions 9t, 10t and each formed as a slant surface of a constant width (h). The housing 1 in Fig. 5 is shown in a state where its inner side portion including the inner peripheral surfaces 9a, 10a is developed in plane. In this developed Figure and Fig. 6, the reference line (Z) means a line mutually connecting the centers of the bolt-insertion holes 11 formed at the opposite ends of the housing 1.

The left and right outside peripheral surfaces 12, 12 of the housing 1 each comprises outer-diameter side surfaces 12a, 12a which are inclined surfaces in a direction spreading with respect to an axis (P) of the housing and an inner-diameter side surface with respect to the housing axis (P) and inner-diameter side surfaces 12b, 12b (one example of the 'side peripheral surface portion') that are inclined in a direction narrowing with respect to the housing axis (P). Ridge lines (e), (e) of these inner and outer side surfaces 12a, 12b are set to become parallel to the reference line Z when seen from a side (in a diametrical direction with respect to the housing axis P). In consequence, as shown in Fig. 5, each of the inner peripheral surfaces 9a, 10a is inclined by an angle (□) with respect to the ridge line (e) when seen from the side surface and can be defined as a constant surface (a slant surface) of a constant width (h). Each of the outside end edges (f) of the inner peripheral surfaces 9a, 10a is formed by progressively changing an inward (inward in the housing-widthwise direction) angle (β) of a segment connecting the housing axis P to one point on the ridge line (e) which is an arc (may be an substantial arc) taking the housing axis (P) as its center, in the peripheral direction.

More specifically, an inclination angle (β) with respect to the edge lines (e), (e) of the left and right outside peripheral surfaces 12, 12 is formed so that it linearly and progressively increases (progressively decreases when seen from the other side end) from a small angle close to "0" degrees (may be about draft of the mold) at one end (an end on a lower side of the paper surface at the inner peripheral surface 9a on the left side in Fig. 5 and an end on an upper side of the paper surface at the inner peripheral surface 10a on the right side) to a large angle at the other end. A surface surrounded by the ridge line (e) and the outside end edge (f) is the above-mentioned inner-diameter side surface 12b. Each of the inner side peripheral surfaces 13, 13 of the inner peripheral end portions 9t, 10t is formed as a surface having a small angle of about the draft from an inner end edge (g) of each of the inner peripheral surfaces 9a, 10a. The space 6 is a portion surrounded by side peripheral walls 14, 14 slightly near the inner side from the left and right inner side peripheral surfaces 13, 13 and an inner peripheral wall 15. Preferably, the space is formed smaller in size than the gasket 2 so that the sealing property can be improved by compressing the gasket 2 toward the inner-diameter side when assembling it to the pipe K.

Each of end surfaces 8a, 8a, which are end portions in a peripheral direction of the paired housings 1, 1 is dividedly formed with a concave portion 16 and a convex portion 17 for performing the relative-positioning by being fitted into each other on assembling. The concave portion 16 is formed to be concaved in with side walls 16a, 16a corresponding to side peripheral walls 14, 14 and a rear-surface wall 16b corresponding to an inner peripheral wall 15. The convex portion 17 is formed in a substantially horizontally oriented-C shape, namely a projection-shape which has side projections 17a, 17a corresponding to side peripheral walls 14, 14 and a main projection 17b corresponding to the inner peripheral wall 15. As shown in Figs. 5 and 6, the concave portion 16 is formed slightly larger than the convex portion 17. Concretely, in a fitting state where the concave portion 16 is inserted into the convex portion 17, a clear horizontal clearance s1 is formed between a side wall 16a and a side projection 17a and a slight vertical clearance s2 is formed between the rear surface wall 16b and the main projection 17b (s1≧s2).

As such, there is provided a relative-position adjusting means (B) which enables the relative positions of the paired housings 1, 1 in a fitting state where the concave portion 16 in the housing-widthwise direction is set to make longer than the convex portion 17 in the housing-widthwise direction, and the concave portion 16 and the convex portion 17 are fitted into each other to be staggeringly moved in a mutually twisting direction and allows the retaining means I to function as they are staggeringly moved. More specifically, as shown in Fig. 6 and the like, the relative-position adjusting means comprise a structure such that the paired bolt-insertion holes 11, 11 are set to slots of a largeness applicable with somewhat allowance error to the bolt-insertion position in the housing-widthwise direction (coincident with the direction axial of the pipe when assembling it to the pipe K) and a structure such that the above-mentioned concave portion 16 is made longer than the convex portion 17 in the housing-widthwise direction.

As shown in Figs, 2, 7 and 8, this is a means for making the housings 1, 1 rotate and move with respect to each other around a rotation-axis (X) which is an axis perpendicular to the above-mentioned imaginary horizontal plane and passes a cross point of the housing axis (P) with the reference line (Z), (and which is perpendicular to the both of the housing axis (P) and the reference line (Z)), to be positioned offset with respect to one another. Even in the twisting and offset-positioning state, they can be attached and fixed to the pipe (K) as a pipe joint by using the bolt 3 and the nut 4. The rotation direction (a twisting direction) may be rightward (in a direction indicated by an arrow (D3) in Fig. 6) or leftward (in a direction indicated by an arrow (D4) in Fig. 6). The housings are slightly twisted and moved with respect to one another by the relative-position adjusting means B, although explained in details later, when each of the annular grooves 5, 5 has a width narrower or wider than the standard width, to bring the opposite end portions in a peripheral direction of the flange claws 9, 10 into butting contact with the left and right side peripheral walls 5a, 5b of the annular grooves 5, 5, thereby enabling the housing-shaped pipe joint (A) to be assembled and attached in rich rigidity.

As shown in Figs. 2 and 3, in the fitting state, a pair of housings 1, 1 have their respective inner peripheral surfaces 9a, 10a to be continuously provided to form a loop shape when seen in the housing-widthwise direction. The loop shape is formed in the shape of a substantial ellipse which has a diameter (Ra) in a housing-opening direction slightly larger than the largest diameter (Dmax) within an allowable dimension error range and a diameter (Rb) in an inward direction of the housing is slightly smaller than the smallest diameter (Dmin) within the allowable dimension error range at a diameter (D) of a groove bottom 5c of the annular groove 5 (see particularly Fig. 3(b)). Owing to such a dimension setting, as shown in Fig.2 (a), in a state where the paired housings 1, 1 are fitted into the annular grooves 5 and attached thereto, the innermost portions of the inner peripheral surfaces 9a, 10a are surely brought into butting contact with the groove bottoms 5c, in a state where the opening portions of the inner peripheral surfaces 9a, 10a do not butt against the groove bottoms 5c of the annular grooves 5 to support them, and an obvious clearance is formed between the opposite end surfaces 8a and 8a.

In an attached state shown in Fig. 2(a), if the clearance between the opposite end surfaces 8a, 8a is defined as a first clearance nl and a clearance between the bottom surface 16d of the concave portion 16 and a top surface 17d of the convex portion 17 is defined as a second clearance n2. It is better to set the dimensions of these first and second clearances n1, n2, and vertical clearances s2 between the rear wall 16b and the main projection 17b so that there is established a relation formula s2≦n1<n2 for the following reasons.
First, when fastening by the bolt 3 and the nut 4, the end surfaces 8a and 8a must be brought into contact with one another. This necessity leads to the formula of n1<n2. Next, a relation n1>0 is necessary to make the bolt 3 and the nut 4 freely exert the fastening force. From the aspect of the purpose of positioning between the housings 1, 1, the vertical clearance s2 which is a diametrical clearance with respect to the axis (P) of the concave portion 16 and the convex portion 17 that don't exert so much influence on the twisting movement of the housing is preferably as small as possible. As a result, the above-mentioned relation formula is obtained.

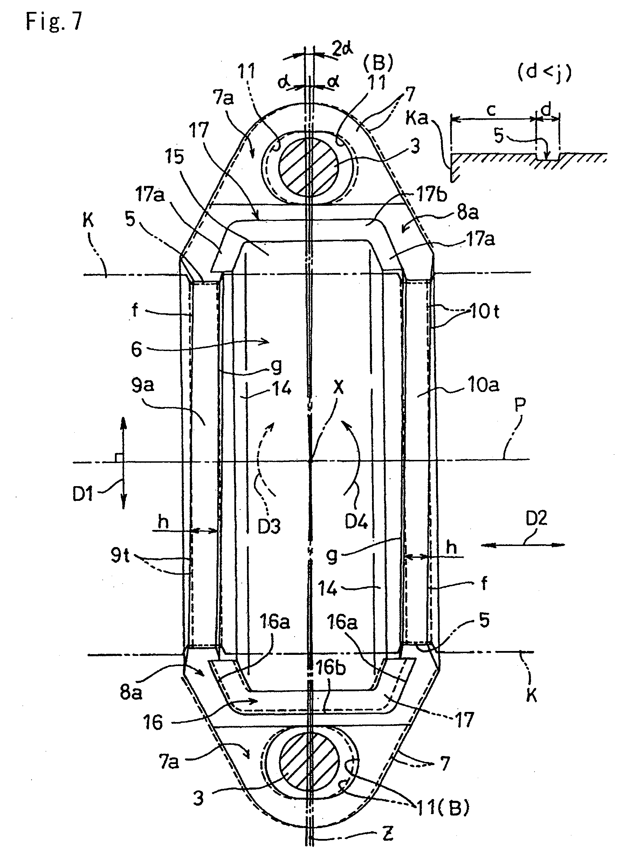

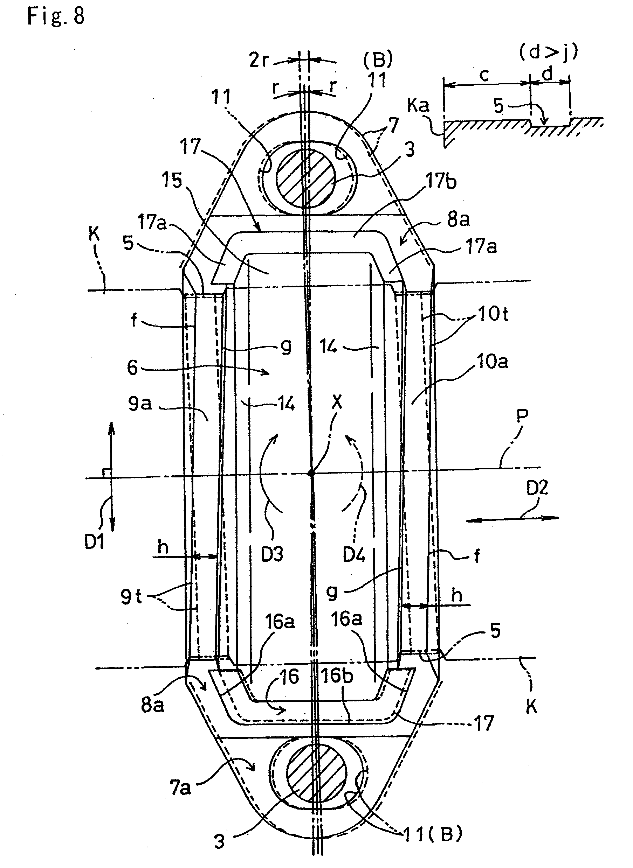

Next, an explanation is given for the attaching situations of the housing-shaped pipe joint (A) in distinct cases where the annular groove 5 of the pipe K has various different widths. The annular groove 5 formed by rolling excellent in productivity has a property that cannot avoid to have its groove-width become relatively large in dimension allowance and to form a corner (R) and an angle (R). Therefore, an explanation is made separately and respectively by showing in Fig. 6 a standard state where the annular groove is formed in a reference dimension as designed; in Fig. 7 a state where the groove width is narrower than the reference value; and in Fig. 8 a case 1 where the groove width is wider than the reference value and a case 2 where the groove width is wider than the reference value. Here, for simplifying purpose, the reference value of the groove width is determined as (j) and the actual groove-width is determined as (d). The groove width (d) is an arithmetic average value [(d=(d1 + d2)/2)] acquired from the groove-opening width d1 and the groove-bottom width d2.

First, the standard state, as shown in Fig. 6, is at the time when the groove width (d) of the annular groove 5 formed separately from the pipe end (Ka) by a distance (c) is the same value just as the reference value (d=j). In this standard state, the housing 1 has the reference line (Z) peripherally coincident with the direction perpendicular (a direction indicated by (D1)) to the axis (P) of the pipe (K) (=housing axis) and the peripheral direction of the annular groove 5. In this state, there is obtained a state where only the peripheral ends of the inner peripheral end portions 9t, 10t are brought into butting contact with the side peripheral walls 5a, 5b of the annular groove 5. More specifically, it has come to the state where the respective inner peripheral surfaces 9a, 10a shown in solid lines in Fig. 6 of one housing 1 indicate immediately (X) when seen in a direction of the rotation-axis X as well as the respective inner peripheral surfaces 9a, 10a (shown in broken lines) of the other housing and the ridge lines (e), (e) of the outer side peripheral surfaces 12, 12 of the housings 1, 1 are coincident with one another to be seen as one line. Further, the bolt 3 of the retaining means (I) is positioned just at a center of the immediately left and right direction of the bolt-insertion hole 11 (a direction indicated by an arrow (D2) in the housing-widthwise direction) and the convex portion 17 is positioned just at a center of the left and right direction of the concave portion 16 (a direction indicated by an arrow (D2) in the housing-widthwise direction).

In consequence, when seen in a direction of the rotation-axis (X), if the paired housings 1, 1 are attached to the pipes (K, K) by fastening them with the bolt 3 and the nut 4 under a condition where the paired housings 1, 1 have their ridge lines (e), (e) just overlapped with each other when seen in the direction of the rotation axis, the respective housings 1, 1, have their inner peripheral surfaces 9a, 10a the innermost portions of which are brought into butting contact with the groove bottoms 5c as well as with the left and right side peripheral walls 5a, 5b, whereby the pipes (K. K) are continuously connected to each other in a sealed manner in a rigid state where no chattering exists between each of the pipes (K) and the housing-shaped pipe joint (A). More specifically, in this case, the twisting angle around the rotation-axes (X) of the housings 1, 1 is '0' degrees.

Therefore, when the thrust of the pipe (K) exerted by the inner pressure and the thermal expansion and contraction occur, it is possible to fully stand against a force exerted if the pipe (K) and the pipe joint (A) try to make a relative movement in a longitudinal direction of the pipe or the pipes (K, K) are mutually bent and deformed. Accordingly, this arrangement can remove the support means exclusively used for supporting and suspending the pipes (K) at a plurality of portions in front of and at the back of the pipe joint (A) in the vicinity thereof. This can realize the housing-shaped pipe joint (A) more advantageous than conventional ones from all the aspects of the space for arranging pipes, the simplification of the structure, and the cost.

For reference, Fig. 10(b) shows an enlarged and simplified one of the relationship between the annular groove 5 and the inner peripheral end portion 9t of the flange claw 9 in the standard state. It can be understood that if the pipe joint is assembled by an inner peripheral surface 9a inclined with respect to the reference line (Z) (ridge line (e)) in a normal state where the reference line (Z) is perpendicular to the axis (P) of the pipe (K) and how, in that state, the inner peripheral end portion 9t has its opposite ends brought into just butting contact with the side peripheral walls 5a, 5b and housed in the groove-width direction (a direction indicated by an arrow (D2)) without causing any chattering. More specifically, there is an advantage of being able to confirm that the paired housings 1, 1 are in a standard (reference) assembling state where a pair of bolt-insertion holes 11, 11 of the paired housings 1, 1 have centers coincident with one another by conducing from the external side such a visual observation that the ridge lines (e), (e) are overlapped with each other when seen in the direction of the rotation-axis (X).

Next, provided that the annular groove 5 has a width narrowed, with the paired housings 1, 1 in a relative twisting position identical to that of the standard state (see Fig. 6), the inner peripheral surfaces 9a, 10a being inclined, the inner peripheral end portions 9t, 10t have the peripheral end portions projecting more than the groove width of the narrow annular groove 5 and therefore cannot be fitted into the annular groove 5 as they are. Then as shown in Fig. 7, the respective housings 1, 1 are rotated (twistingly moved) around the rotation-axis (X) in a direction where each of the annular grooves 5 of the inner peripheral surfaces 9a, 10a has an angle (an angle in a direction indicated by an arrow (D1) which is perpendicular to the axis of pipe (P) with respect to a center of the groove 5, become smaller than an inclination angle (□) with respect to the reference line (Z).

In Fig. 7, the housing 1 arranged opposite to the pipe (K) shown by an imaginary line is twistingly moved by an angle (α) in a direction indicated by an arrow (D4) with respect to the reference line (Z') in the standard state and the housing 1 (shown by a broken line) positioned ahead of the pipe (K) is twistingly moved by an angle (α) in a direction indicated by an arrow (D3) with respect to the reference line (Z). In consequence, the relative twisting movement is performed between the twistingly moved housings 1, 1 by an angle (2 α). At this time, the bolt 3 is moved by an angle (α) around the rotation axis (X) with respect to the bolt-insertion hole 11 of the housing 1 drawn by a solid line. However, it is moved toward the opposite side with respect to the front housing 1 drawn by the broken line and therefore the movement amount is compensated.

In consequence, even if the paired housings 1, 1 are twistingly moved to one another, the absolute position of the bolt 3 is not displaced theoretically from the initial position (position above the reference line (Z)') in the standard state). Further, the convex portion 17 existing within the concave portion 16 can be moved by a twisting angle of (2α) without doing wasteful work attributable to each of the above-mentioned horizontal clearances (S1). In fact, the housings 1, 1 are twistingly moved with the bolt 3 and the nut 4 loosely and provisionally fastened and then the bolt 3 and the nut 4 are finally fastened. As a result, even if the annular groove 5 has the width reduced by a large error unexpectable in the cutting work, the housing-shaped pipe joint (A) according to the present invention can attend to connecting the pipes (K, K) to each other rigidly in a sealed manner and therefore can equally exert the aforesaid function and effect in the standard state.

For reference, Fig. 10(a) shows an enlarged and simplified one of the relationship between the annular groove 5 with its width reduced and the inner peripheral end portion 9t of the flange claw 9. A housing 1 not shown is twistingly moved through an angle (α) in a direction indicated by an arrow (D4) and assembled, thereby allowing the inclination angle of the inner peripheral surface 9a with respect to the annular groove 5 to become an angle (□-α) smaller than that (□) of the standard state. Therefore, like the case of the standard state, the opposite end portions of the inner peripheral end portions 9t are brought into just butting contact with the corresponding side peripheral walls 5a, 5b, thereby allowing the housing 1 not shown to be installed without any chattering caused in the groove-widthwise direction (i.e., in a direction indicated by an arrow (D3)).

In the case of the annular groove 5 with its width increased, when the paired housings 1, 1 are in a relatively twisted position (see Fig. 6) identical to that of the standard state, although the inner peripheral surfaces 9a, 10a are inclined, the annular groove does not reach the left and right side peripheral walls 5a, 5b and therefore produces a clearance in the direction of the axial P of the pipe with the result of being unable to rigidly assemble the pipe joint (A). Then as shown in Fig. 8, the respective housings 1, 1 are rotated (i.e., twistingly moved) around the rotation-axis (X) in a direction where the annular grooves 5 of the inner peripheral surfaces 9a, 10a each has an angle with respect to its center (an angle in a direction indicated by an arrow (D1) which is perpendicular to the pipe-axis (P)) becomes larger than the inclination angle (□)with respect to the reference line (Z).

In Fig. 8, the housing 1 arranged opposite to the pipe K indicated by an imaginary line is twistingly moved by an angle (γ) in a direction indicated by an arrow (D3) with respect to the reference line (Z') in the standard state and the housing 1 (indicated by a broken line) positioned in front of the pipe (K) is twistingly moved by an angle (γ) in a direction indicated by an arrow (D4) with respect to the reference line (Z) in the standard state. Accordingly, the relative twisting movement of the twistingly moved housings 1, 1 is performed by an angle of (2γ). At this time, the bolt 3 is moved by the angle (γ) around the rotation-axis (X) with respect to the bolt-insertion hole 11 of the housing 1 drawn by a solid line. However, the bolt 3 is moved to the opposite side with respect to the front housing 1 drawn by a broken line and therefore the amount of movement is compensated.

Consequently, even if the paired housings 1, 1 are twistingly moved to the opposite side when they have their widths reduced, the absolute position of the bolt 3 is not moved theoretically from the initial position (a position on the reference line (Z') in the standard state). Further, thanks to the presence of the abovementioned horizontal clearance (s1), the convex portion 17 within the concave portion 16 can be moved by a twisting angle (2γ) without taking any trouble. In fact, with the bolt 3 and the nut 4 loosely and provisionally fastened, the housings 1, 1 are twistingly moved and then the bolt 3 and the nut 4 are finally fastened. As a result, even if the annular groove 5 has its width increased by a large error unexpectable in the cutting work, the housing-shaped pipe joint (A) according to the present invention can attend to mutually connecting the pipes (K, K) rigidly in a sealed manner and can equally exert the above-mentioned function and effect in the standard state.

For reference, Fig. 10c shows an enlarged and simplified one of the relationship between the annular groove 5 with its width increased and the inner peripheral end portion 9t of the flange claw 9. By twistingly moving the housing 1 not shown in a direction indicated by an arrow (D3) through an angle (γ) and assembling it, the inclination angle of the inner peripheral surface 9a with respect to the annular groove 5 comes to be an angle (□) larger than "0" in the standard state. Namely, the inclination angle is (□+γ). In consequence, like the case of the standard state, the opposite end portions of the inner peripheral end portions 9t are brought into just butting contact with the corresponding side peripheral walls 5a, 5b, thereby enabling the housing 1 to be installed without causing the chattering in the groove-widthwise direction (i.e., in a direction indicated by an arrow (D3)).

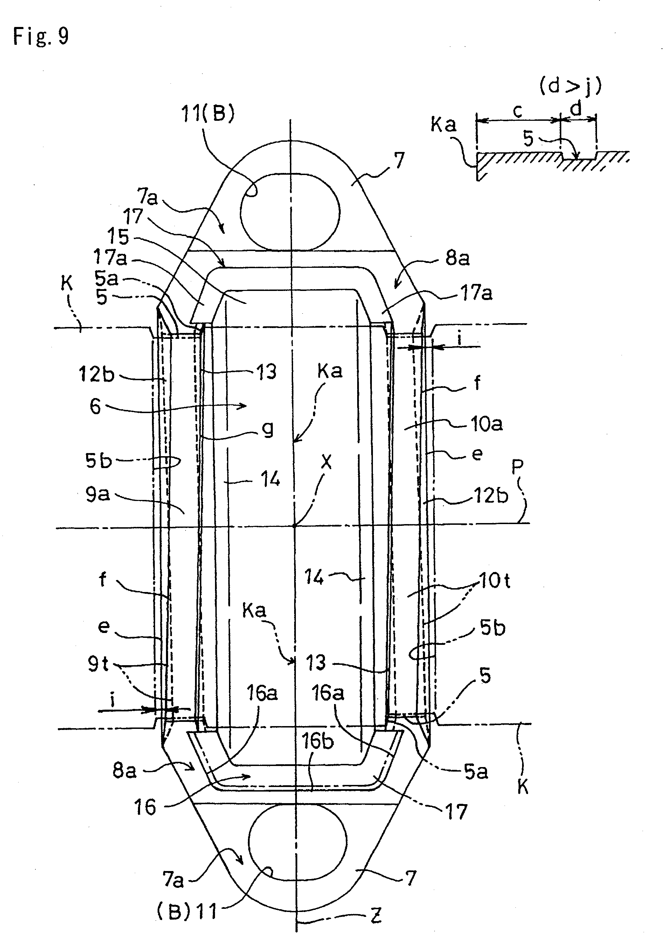

In addition, even with the annular groove 5 having a width increased, in a special case where the distance from the pipe end Ka of the side peripheral wall 5a on the pipe end Ka side of the annular groove 5 is formed precisely according to the reference value, one pair of housings 1, 1 can be placed in the same assembled state as the standard state shown in Fig. 6. More specifically, as shown in Fig. 9, in the event that the paired housings 1, 1 are assembled to the pipe (K) with the angle of the twisting movement reaching "0" degrees, namely in the normal state, irrespective of the inclinations of the inner peripheral surfaces 9a, 10a, there exists an obvious clearance (i) in the direction axial (P) of the pipe between the inner-diameter side surfaces 12b of respective inner peripheral end portions 9t, 10t and a side peripheral wall 5b on a side far from the pipe end (Ka) of each annular groove 5.

However, one end of each of the inside peripheral surfaces 13 at the inner peripheral end portions 9t, 10t is put into a state where it is brought into just butting contact with the side peripheral wall 5a on the side close to the pipe end (Ka), of the annular groove 5 without causing the chattering, in the same way as the normal state. Therefore, in cooperation with the construction such that the paired pipes (K, K) have the pipe ends (Ka, Ka) brought into a tight contact with each other without the presence of any clearance, the paired pipes (K, K) can be also connected to one another rigidly in a sealed manner without causing the chattering. It is to be noted that in the special case shown in Fig. 9, there is a condition that the pipe ends (Ka, Ka) butt against each other. However, in each of the standard state in Fig. 6, the reduced-width state in Fig. 7 and the general increased-width state in Fig. 8, even if somewhat clearance is present between the pipe ends (Ka, Ka), the housing-shaped pipe joint (A) according to the present invention can be assembled rigidly.

As we have explained above, the housing-shaped pipe joint according to the present invention, it has inner peripheral surfaces 9a, 10a of the paired flange claws 9, 10 formed as slant surfaces inclined by an angle (□) with respect to the reference line (Z), which is a center line passing through a center point of the paired bolt-insertion holes 11, 11 in the widthwise direction of the housing 1, as well as with respect to the ridge line (e), which is an contour line (in a diametrical direction with respect to the housing axis P) in the widthwise direction of the housing 1. Owing to this construction, the flange claws 9, 10 including the inner peripheral surfaces 9a, 10a is each formed so that its sectional shape in the diametrical direction is narrowing with a width in the left and right direction (the housing-widthwise direction) decreasing as it comes closer to the inner-diameter side. And it adopts the fitting structure where the concave portion 16 is fitted into the convex portion 17 or vice versa so as to improve the easiness of mutually assembling the housings 1,1 which can make the twisting movement and are identical parts and also a necessary clearance is provided on either of both sides of each of the concave portion 16 and the convex portion 17 in the housing-widthwise direction. This can offer the following function and effect.

First, the inner peripheral surfaces 9a, 10a to be brought into butting contact with the groove bottom 5c of the annular groove 5 in each of the flange claws 9, 10 is formed as an inclined surface having a width (h) smaller than the smallest groove width of the annular groove 5 of the pipe (K) and extending peripherally over the entire length. Therefore, should the annular groove 5 have a dimension error, a fine twisting movement of the housing 1 changes the inclination angle with respect to the annular groove 5 of each of the inner peripheral surfaces 9a, 10a with the result of being able to obtain a state where the opposite end portions of each of the inner peripheral end portions 9t, 10t are brought into butting contact with the side peripheral walls 5a, 5b of the annular groove 5. Owing to this arrangement, even with the annular groove 5 formed by rolling, which is slightly inferior in dimension accuracy but advantageous in the aspect of the productivity and cost, compared with connection using conventional housing-shaped pipe joint, the respective pipes (K, K) are assuredly assembled and fixed to the housings 1, 1 in a rigid state where the chattering does not occur in the longitudinal direction of the pipe. In other words, it can offer the advantage of being able to improve the rigidity in the portion of the housing-shaped pipe joint which connect the pipes to each other in a sealed manner. This, for examples, dispenses with the construction for supporting the pipes at a plurality of portions in front of and at the back of the pipe joint by using the suspending member or the supporting member and therefore offers the advantage that the space and the cost can be saved.

In this case, if the annular groove 5 has the groove width narrower than the reference value, the paired housings 1,1 are twistingly moved in a direction where the inclination angle with respect to the annular grooves 5 of the inner peripheral surfaces 9a, 10a come to be an inclination angle (□-α) smaller than that in the reference state (see Figs. 6 and 10(b)), whereby the peripheral end portions of the inner-diameter side surface 12b and the inner side peripheral surface 13 at the inner peripheral end portions 9t, 10t can be brought into butting contact with the corresponding side peripheral walls 5a, 5b (see Fig. 7 and Fig. 10(a)). In the case where the annular groove 5 has a groove width wider than the reference value, the paired housings 1,1 are twistingly moved in a direction where the inclination angle with respect to the annular groove 5 of each of the inner peripheral surfaces 9a, 10a comes to be an inclination angle (□ + γ) larger than that in the reference state (Figs. 6 and 10(b)), whereby the inner-diameter side surface 12b of the peripheral end portions and the inner side peripheral surfaces 13 at the inner peripheral end portions 9t, 10t can be brought into butting contact with the corresponding side peripheral walls 5a, 5b (see Fig. 8 and Fig. 10(c)). Further, in the event that the annular groove 5 has a reference groove width, the inclination angle with respect to the annular groove 5 of each of the inner peripheral surfaces 9a, 10a is the same as the inclination angle (□) with respect to the reference line (Z) (and a ridge line (e)). In this state, namely with the twisting angle of each of the housings 1, 1 being '0' degrees, the peripheral end portions of the inner-diameter side surface 12b and the inner peripheral surface 13 at the inner peripheral end portions 9t, 10t can be brought into butting contact with the corresponding side peripheral walls 5a, 5b (see Fig.6 and Fig. 10(b)).

When performing the twisting movements in both directions, although the concave portion 16 and the convex portion 17 are moved while rotating relatively to each other, this rotation-movement is arranged not to inhibit the above-mentioned twisting movement of the housings 1,1 by relying on the clearances s1, s1 provided on the opposite sides of the widthwise direction of the concave portion 16 and the convex portion 17. Since the inner peripheral surfaces 9a, 10a are inclined by a relative moderate angle over the entire or substantially entire peripheral length, the inner peripheral end portions 9t, 10t are brought into butting contact with the side peripheral walls 5a, 5b at the portions each of which is put into a state extremely close to a surface-contact and therefore offers an advantage to exert a rigidly assembled state of the pipe joint stably. Besides, each of the inner peripheral surfaces 9a, 10a and the annular groove 5 is inclined by such an angle that it becomes smallest when the groove width is the narrowest. Thus when the groove width is the largest, each of the inner peripheral surfaces 9a, 10a and the annular groove 5 has an inclination angle which is inhibited from becoming extremely large, thereby enabling the above-mentioned advantage (i.e., to exert a rigidly assembled state of the pipe joint stably) to be enjoyed irrespective of the annular groove having a narrow width or a wide one.

Moreover, in the case where the flange claws 9, 10 are fitted into the annular grooves 5 and assembled to the pipes (K, K), the paired housings have a pair of end opposing surfaces 8a, 8a so set as to form a clearance therebetween(see Fig. 2(a)) and fastened strongly by using the bolt 3 and the nut 4, a portion which initially comes into butting contact with the groove 5c is arranged to position at a center of each of the inner peripheral grooves 9a, 10a in a peripheral direction. Thus when the predetermined fastening force is applied, it can be effectively used as a force in a direction for improving the sealing property by fastening the gasket. For example, in a structure where the end surfaces 8a, 8a are firstly brought into butting contact, there is conceived such a disadvantage that if the bolt 3 and the nut 4 are fastened more and more, it early reaches the finally fastened state where the end surfaces 8a, 8a are brought into butting contact with each other and therefore even if the fastening torque is further increased, it does not act on the force for effectively fastening the gasket. However, the housing-shaped pipe joint according to the present invention does not cause such a disadvantage.

## Claims

1. A housing-shaped pipe joint which comprises a pair of housings, each substantially horizontally-oriented C-shaped in section and semi-circular in its entire shape and formed with a flange claw having an inner peripheral end portion able to be freely fitted into the annular groove, at the opposite ends of a space in which a gasket is arranged so as to connect end portions in a pair of a pipe, each of which includes an annular groove at an outer periphery thereof, by bringing them into mutually butting contact in a sealed manner with a ring-like gasket fitted over the opposite end portions as it is bridged thereover, and a means for retaining the housings as forcedly pressed in a direction where the housings approach each other, wherein
the flange claw has an inner peripheral surface formed in the shape of a slant surface inclined with respect to a reference line which is a center in a widthwise direction of the housing over an entire or a substantially entire length in a peripheral direction at an inner peripheral end portion,
the paired housings have end portions in the peripheral direction, so that each of the end portions is formed with a concave portion and a convex portion dividedly so that they are fitted into each other, thereby allowing the paired housings to relatively position with respect to one another, and
there is provided a relative-position adjusting means for setting a dimension of the concave portion in the housing-widthwise direction longer than that of the convex portion in the housing-widthwise direction, enabling the relative positions of the paired housings with respect to each other in a fitting state where the concave portion and the convex portion are fitted into each other to be staggeringly moved in a mutually twisting direction, and allowing the above-mentioned retaining means to function as they are staggeringly moved.

2. The housing-shaped pipe joint as defined in claim 1, wherein the inner peripheral surface has a width set to become smaller than the smallest width of the annular groove and constant in a peripheral direction.

3. The housing-shaped pipe joint as defined in claim 1 or 2, wherein
the retaining means comprises a bolt-insertion hole for attaching pieces to be formed at the peripheral opposite end portions of the housing, respectively, and a bolt and a nut free for thread-attachment through the bolt-insertion holes of the respective attaching pieces in the fitted state, and
the relative-position adjusting means includes a construction such that the bolt-insertion hole is set to a size applicable with somewhat allowance error to a bolt-insertion position in the housing-widthwise direction.

4. The housing-shaped pipe joint as defined in claim 3, wherein the attaching piece has a surface facing the opposite housing side, the surface being set to a position retracted from an end surface peripheral of the housing.

5. The housing-shaped pipe joint as defined in any one of claims 1to 4, wherein
in the fitted state, the paired housings have their respective inner peripheral surfaces continuously provided to each form a loop-shape when seen in the housing-widthwise direction, the loop-shape being formed in the shape of an ellipse in which a diameter in a direction of an opening of the housing is slightly larger than the largest diameter within an allowable dimension error range of the annular groove and a diameter in a direction inwards of the housing is slightly smaller than the smallest diameter within an allowable dimension error range of the annular groove.

6. The housing-shaped pipe joint as defined in any one of claims 1 to 5, wherein
an outer end edge of the inner peripheral side, which comes to be an outer side in the housing-widthwise direction is formed by inclining a side peripheral surface portion of a constant or a substantially constant width from an inner-diameter side end of an outer side surface of the housing in a direction where the inner-diameter side end approaches toward an inner side in the housing-widthwise direction and progressively changing its inclination angle in a peripheral direction.

7. The housing-shaped pipe joint as defined in claim 6, wherein
the side peripheral surface portion has an outer diameter side end an edge of which is formed to be in parallel to the reference line when seen in a direction perpendicular to the housing-widthwise direction.
